# EUROPÄISCHE PATENTSCHRIFT

(11) **EP 2 931 574 B1**
(45) Veröffentlichungstag und Bekanntmachung des Hinweises auf die Patenterteilung: **14.12.2016**
(21) Anmeldenummer: 13780351.6
(22) Anmeldetag: 22.10.2013
(51) Int. Cl.: B60T 8/36

(54) **HYDRAULIKBLOCK FÜR EIN HYDRAULIKAGGREGAT**
HYDRAULIC BLOCK FOR A HYDRAULIC UNIT
BLOC HYDRAULIQUE POUR GROUPE HYDRAULIQUE

(30) Priorität: 14.12.2012 DE 102012223172
(43) Veröffentlichungstag der Anmeldung: 21.10.2015
(73) Patentinhaber: Robert Bosch GmbH, 70442 Stuttgart (DE)
(72) Erfinder: WEH, Andreas, 87477 Sulzberg (DE)
(86) Internationale Anmeldenummer: PCT/EP2013/072091
(87) Internationale Veröffentlichungsnummer: WO 2014/090465

(56) Entgegenhaltungen:
- EP-A2- 1 134 141
- EP-A2- 1 707 463
- EP-A2- 1 930 218
- DE-A1- 10 114 298
- DE-A1-102007 047 124
- DE-A1-102010 039 617

## Beschreibung

### Stand der Technik

Die Erfindung geht aus von einem Hydraulikblock für ein Hydraulikaggregat zur Steuerung des Bremsdrucks einer schlupfregelbaren Fahrzeugbremsanlage nach den gattungsbildenden Merkmalen des Anspruchs 1.

Ein Hydraulikaggregat mit einem derartigen Hydraulikblock ist beispielsweise bekannt aus der DE 10 2007 047 124 A1. Dieses Hydraulikaggregat steuert den Bremsdruck in zwei hydraulisch voneinander getrennten Bremskreisen. Zur Erfassung des in den beiden Bremskreisen vorherrschenden Bremsdrucks sind Aufnahmen für mehrere Drucksensoren am Hydraulikblock ausgebildet, wobei jedem Bremskreis wenigstens ein Drucksensor zugeordnet ist. Diese Aufnahmen sind aus fertigungstechnischen und aus bauraumtechnischen Gründen jeweils am innen liegenden geschlossenen Ende einer druckmittelführenden Sacklochbohrung angeordnet. Somit entspricht die Anzahl vorhandener Sacklochbohrungen der Anzahl von Aufnahmen bzw. Drucksensoren.

Sacklochbohrungen werden spanabhebend, beispielsweise durch Bohren hergestellt und haben damit einen bedeutenden Anteil an den Zerspanungskosten eines Hydraulikblocks. Zudem steht am Hydraulikblock lediglich ein begrenztes Blockvolumen zur Verfügung, um diese Sacklochbohrungen unterzubringen. Ein Mindestabstand zwischen den Sacklochbohrungen ist notwendig um zu verhindern, dass unter hohem Druck stehendes Druckmittel des einen Bremskreises in den jeweils anderen Bremskreis übertreten kann. Mit der Anzahl von Bohrungen und Aufnahmen an einem Hydraulikblock vergrößert sich damit zwangsweise das Blockvolumen. Zudem münden die Sacklochbohrungen zur Umgebung des Hydraulikblocks hin aus und müssen im Bereich ihrer Mündung durch ein Verschlusselement, bevorzugt als eingepresste Kugel ausgeführt, verschlossen werden. Mit der Anzahl von Verschlusselementen erhöht sich die Anzahl an Bauteilen, der Montageaufwand und das Gewicht des Hydraulikaggregats, sowie das Risiko einer unakzeptablen Undichtigkeit.

### Vorteile der Erfindung

Demgegenüber weist ein Hydraulikblock nach den Merkmalen des Anspruchs 1 den Vorteil auf, dass die hydraulische Kontaktierung der den verschiedenen Bremskreisen zugeordneten Drucksensoren anhand lediglich eines einzigen, nach außen geführten Kanals dargestellt ist. Ein einzelner Kanal ist leichter zwischen den ohnehin dicht am Hydroblock gepackten Ausnehmungen und Anschlüssen unterzubringen als mehrere Kanäle und leistet demnach einen geringeren Beitrag zur Vergrößerung des Blockvolumens.

Der Kanal ist fertigungstechnisch einfach als Sacklochbohrung darstellbar, die zu einer Außenseite des Hydroblocks ausmündet und im Mündungsbereich durch ein Verschlusselement verschlossen ist. Ein einzelner Kanal ist preisgünstiger herstellbar, hält die Anzahl zu verschließender Öffnungen am Hydroblock klein und reduziert damit die Gefahr unerwünschter Undichtigkeiten während der Fertigung und insbesondere unter Betriebsbedingungen, gegenüber einem Hydraulikblock der mehrere derartiger Kanäle aufweist.

Weitere Vorteile oder vorteilhafte Weiterbildungen der Erfindung ergeben sich aus den restlichen Ansprüchen und/oder aus der nachfolgenden Beschreibung.

Eine hydraulische Kontaktierung des Kanals mit beiden Bremskreisen ist mittels äußerst kurzen Stichkanälen und auf direktem Weg möglich, was Druckverluste, Druckmitteltotvolumen und die hydraulische Elastizität des Bremskreises minimiert. Die Stichkanäle nehmen ihren Anfang in ohnehin vorhandenen Aufnahmen für Magnetventile und werden mit der Montage dieser Magnetventile verschlossen. Zusätzliche Verschlusselemente können entfallen, so dass weitere Bauteile, Fertigungsaufwand, Blockvolumen, Gewicht und Kosten eingespart werden.

Eine hydraulische Trennung der beiden Bremskreise erfolgt durch ein im erfindungsgemäßen Kanal verankertes Sperrelement. Dieses lässt sich beispielsweise durch bloßes Einpressen im Kanal verankern. Vorteilhafterweise weist der Kanal eine Stufe auf in deren Bereich das Sperrelement angeordnet ist.

In einer vorteilhaften Weiterbildung derErfindung kann das Sperrelement zur Trennung der Bremskreise und das Verschlusselement zum Verschließen des Kanals nach außen zu einem einzigen Bauteil zusammengefasst werden. Dieses lässt sich besonders kostengünstig in nur einem Arbeitsgang montieren.

Hochintegrierte Hydraulikaggregate mit geometrisch robust gestalteten Hydraulikblöcken, kompakten Abmessungen, niedrigem Gewicht, einfacher zerspanungstechnischer Herstellbarkeit und niedrigen Montagekosten stellen insbesondere im Fahrzeugbau einen bedeutenden Wettbewerbsvorteil dar.

Ein Ausführungsbeispiel der Erfindung ist in der Zeichnung dargestellt und in der nachfolgenden Beschreibung detailliert erläutert.

### Zeichnungen

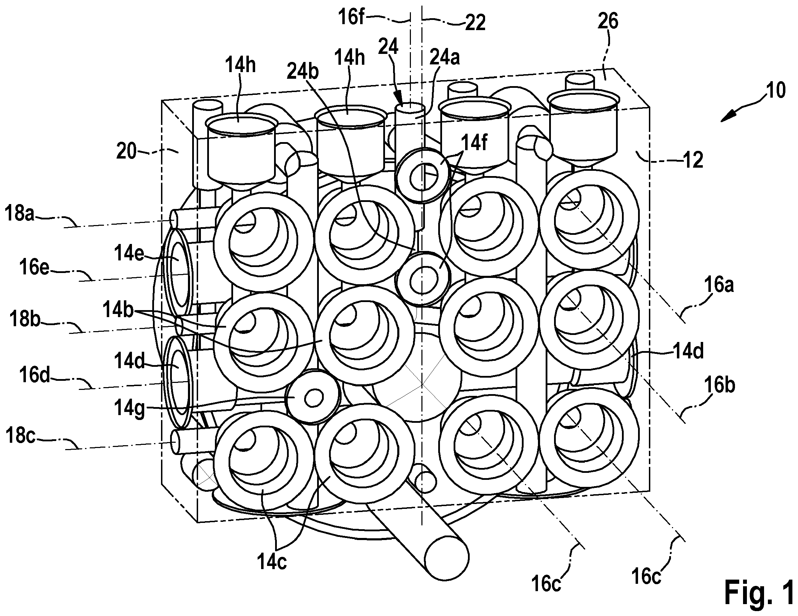

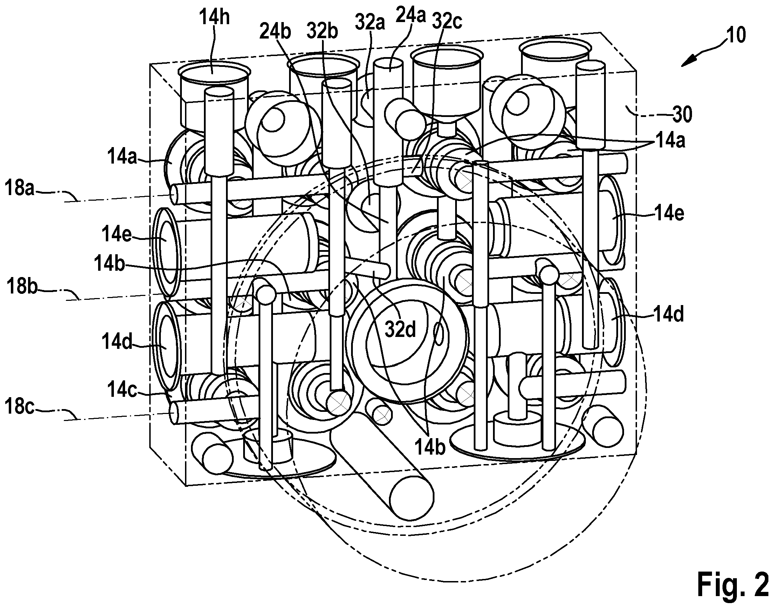

Die Figuren 1 und 2 zeigen jeweils perspektivische Ansichten eines erfindungsgemäßen Hydraulikblocks mit den für das Verständnis der Erfindung notwendigen Aufnahmen und Kanälen.

In Figur 1 ist die Blickrichtung auf eine Vorderseite des Hydraulikblocks gerichtet, zu welcher die für Magnetventile vorgesehenen Aufnahmen hin ausmünden,

Figur 2 zeigt den Blick auf die der Vorderseite gegenüberliegende Rückseite des Hydraulikblocks, welche zur Befestigung eines Elektromotors zum Antrieb von Pumpenelementen dient, die in entsprechenden Aufnahmen eingebaut sind.

Die Figuren 3 und 4 zeigen verschiedene Ausführungsbeispiele von Sperr- und Verschlusselementen.

### Beschreibung des Ausführungsbeispiels

Figur 1 zeigt einen Hydraulikblock 10, insbesondere für ein Hydraulikaggregat zur Regelung des Bremsdrucks in einer schlupfgeregelten Fahrzeugbremsanlage. Bei diesem Hydraulikblock 10 handelt es sich um ein quaderförmiges Gebilde, das vorzugsweise aus metallischem Metall, stranggusstechnisch hergestellt ist. Auf der gemäß Figur 1 dem Betrachter zugewandten Vorderseite 12 dieses Hydraulikblocks 10 münden Aufnahmen 14a, 14b, 14c aus, die vorgesehen sind, um Magnetventile aufzunehmen. Beispielhaft sind insgesamt zwölf derartige Aufnahmen 14 vorhanden, deren Längsachsen 16 parallel zueinander und senkrecht zur Vorderseite 12 des Hydraulikblocks 10 ausgerichtet sind. Jeweils vier dieser Aufnahmen 14 sind in einer geraden, horizontal verlaufenden Zeile 18 angeordnet, wobei insgesamt drei solcher Zeilen 18a, 18b, 18c parallel zueinander in unterschiedlichen Höhen am Hydraulikblock 10 ausgebildet sind. Die der ersten, oben liegenden Zeile 18a zugeordneten Aufnahmen 14a sind vorgesehen, um Ventile aufzunehmen, die einen Druckaufbau in den an den Hydraulikblock 10 anschließbaren Radbremsen einer Fahrzeugbremsanlage steuern. Entlang einer darunter liegenden zweiten Zeile 18b befinden sich Aufnahmen 14b, die zur Aufnahme von Ventilen bestimmt sind, welche einen Druckabbau in diesen Radbremse der Fahrzeugbremsanlage steuern. Wiederum darunter in der dritten, untersten Zeile 18c sind Aufnahmen 14c für Ventile ausgebildet, welche die Fahrzeugbremsanlage umschalten vom Betriebsbremsbetrieb in den Radschlupfregelbetrieb bzw. die eine Versorgung von ebenfalls am Hydraulikblock 10 vorgesehenen Druckerzeugern mit Druckmittel steuern.

Aufnahmen 14d für diese Druckerzeuger befindet sich zwischen der zweiten Zeile 18b und der darunter liegenden dritten Zeile 18c, in einer Anordnung, bei der deren Längsachsen 16d parallel zu den drei Zeilen 18 verlaufen. Die den Druckerzeugern zugeordneten Aufnahmen 14d münden jeweils zu einer der einander gegenüberliegenden Seitenflächen 20 des Hydraulikblocks 10 hin aus.

Von diesen Seitenflächen ist in Figur 1 lediglich die linke Seitenfläche 20 des Hydraulikblocks 10 erkennbar.

Oberhalb der Aufnahmen 14d für die Druckerzeuger sind Aufnahmen 14e für Dämpferelemente vorgesehen. Deren Längsachsen 16e verlaufen ebenfalls parallel zu den drei Zeilen 18a, 18b, 18c der Aufnahmen 14 der Ventile bzw. zu den Aufnahmen 14d der beiden Druckerzeuger. Auch sie münden zu einander gegenüberliegenden Seitenflächen 20 des Hydraulikblocks 10 hin aus.

Weiterhin vorgesehen am Hydroblock sind Aufnahmen 14f und 14g für insgesamt drei Drucksensoren. Die Aufnahmen 14f für einen ersten und für einen zweiten Drucksensor liegen senkrecht übereinander auf einer imaginären, vertikal verlaufenden Mittelachse 22 durch den Hydraulikblock 10, welche diesen in einen linken und einen rechten Teil teilt. Die Aufnahmen 14 im linken und die Aufnahmen 14 des rechten Teils des Hydraulikblocks 10 sind mittels Verbindungskanälen zu jeweils einem Hydraulikkreis verbunden. Beide Hydraulikkreise sind voneinander getrennt, d. h. es besteht zwischen beiden Hydraulikkreisen keine Druckmittelverbindung, damit im Falle des Ausfalls eines Bremskreises der jeweils andere Bremskreis funktiontüchtig bleibt. Die Aufnahme 14f für den ersten Drucksensor befindet sich oberhalb der ersten Zeile 18a von Aufnahmen 14a für Ventile und die Aufnahme 14f des zweiten Drucksensors liegt zwischen dieser ersten Zeile 18a und der zweiten Zeile 18b der Ventilaufnahmen. Eine Aufnahme 14g für den dritten Drucksensor befindet sich im Zentrum eines imaginären Quadrats, dessen Ecken von den Längsachsen 16b und 16c der Aufnahmen 14b und 14c der Ventile in den Zeilen 18b und 18c im nach Figur 1 linken Teil des Hydraulikblocks 10 gebildet wird.

Erfindungsgemäß erfolgt die hydraulische Kontaktierung der Aufnahmen 14f für den ersten und für den zweiten Drucksensor durch einen gemeinsamen Kanal 24. Dieser ist in Form einer Sacklochbohrung ausgebildet, welche zu einer in Figur 1 erkennbaren Oberseite 26 des Hydraulikblocks 10 hin ausmündet. An dieser Oberseite 26 münden auch Aufnahmen 14h für die hydraulischen Anschlüsse der Radbremsen aus. Insgesamt sind vier derartiger Aufnahmen 14h nebeneinanderliegend angeordnet.

Eine Längsachse 16f der den gemeinsamen Kanal 24 bildenden Sacklochbohrung verläuft senkrecht zu den Zeilen 18 der Aufnahmen für die Ventile im Bereich der Mittelachse 22 des Hydraulikblocks 10. Die Sacklochbohrung ist in ihrem Innendurchmesser einmal abgestuft und gliedert sich damit in zwei Bohrungsabschnitte 24a und 24b unterschiedlich großer Innendurchmesser. Im Bereich der Ausmündung zur Umgebung weist der Kanal 24 den durchmessergrößeren Bohrungsabschnitt 24a auf, während der im Inneren des Hydraulikblocks 10 liegende und das geschlossene Ende ausbildende Bohrungsabschnitt 24b demgegenüber in seinem Innendurchmesser reduziert ist. Der Übergang vom Bohrungsabschnitt 24a mit dem größeren Innendurchmesser zum Bohrungsabschnitt 24b mit dem kleineren Innendurchmesser kann zum Beispiel als rechtwinklige Stufe oder als Konus ausgeführt werden.

Figur 2 zeigt den oben beschriebenen Hydroblock 10 von hinten und erlaubt damit dem Betrachter einen Blick auf seine Rückseite 30. Einander entsprechende Elemente sind in Figur 1 und Figur 2 mit den selben Bezugsziffern gekennzeichnet. Aus Figur 2 ist die hydraulische Kontaktierung des gemeinsamen Kanals 24 mit den Aufnahmen 14a, 14b für die Ventile in den Zeilen 18a, 18b einerseits und die hydraulische Kontaktierung des gemeinsamen Kanals 24 mit den Aufnahmen 14f der Drucksensoren andererseits zu erkennen. Letztere Kontaktierung erfolgt über erste und zweite Stichkanäle 32a und 32b, die senkrecht zur Vorderseite 12 bzw. zur Rückseite 30 des Hydraulikblocks 10 verlaufen und damit den gemeinsamen Kanal 24 auf dem kürzest möglichen Weg mit den Aufnahmen 14f der Drucksensoren verbinden. Ferner zeigt Figur 2 gerade und in einem von 90° abweichenden Winkel zur Vorderseite 12 bzw. zur Rückseite 30 des Hydraulikblocks 10 geführte dritte und vierte Stichkanäle 32c, 32d, welche den gemeinsamen Kanal 24 mit jeweils einer der seitlich innen liegenden Aufnahmen 14a bzw. 14b für Ventile verbinden. Der dritte Stichkanal 32c stellt die Verbindung der Aufnahme 14f des ersten Drucksensors mit der Aufnahme 14a in der ersten Zeile 18a im nach Figur 2 rechten Teil des Hydraulikblocks 10 her. Dieser Stichkanal 32a mündet in den im Innendurchmesser größeren Bohrungsabschnitt 24a des gemeinsamen Kanals 24 ein. Mit dem im Innendurchmesser kleineren Bohrungsabschnitt 24b des Kanals 24 ist der vierte Stichkanal 32d verbunden, welcher die hydraulische Kontaktierung zwischen der Aufnahme 14f des zweiten Drucksensors und der innen liegenden Aufnahme 14b des Ventils im linken Teil des Hydraulikblocks 2 in der zweiten Zeile 18b herstellt. Die so kontaktierten Aufnahmen 14a und 14b gehören verschiedenen Bremskreisen an. Beide Stichkanäle 32c, 32d verlaufen in waagerechten und auf zwei unterschiedlichen Höhen geführten Schnittebenen durch den gezeigten Hydraulikblock 10. Die Schrägung der beiden Winkel der Stichkanäle 32c, 32d ist erkennbar gegensinnig gewählt.

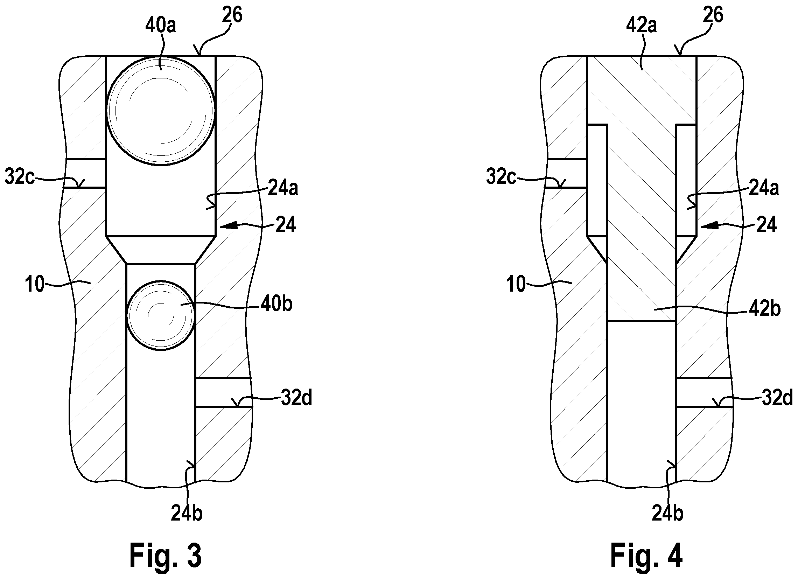

Die Figuren 3 und 4 zeigen den gemeinsamen Kanal 24 zur Kontaktierung der der Aufnahmen 14f für den ersten bzw. den zweiten Drucksensor im Längsschnitt. Erkennbar sind die Bohrungsabschnitte 24a und 24b mit ihren unterschiedlich großen Innendurchmessern und mit dem zwischen ihnen vorgesehenen Übergang, welcher hier exemplarisch als Konus ausgebildet ist. Das offene Ende des Kanals 24 befindet sich an der Oberseite 26 des schraffiert angedeuteten Hydraulikblocks 10. Am innenliegenden, geschlossenen Ende des Kanals 24 ist die Einmündung des vierten Stichkanals 34d gezeigt. In den Bohrungsabschnitt 24a mit dem größeren Innendurchmesser mündet von der dazu gegenüberliegenden Seite her der höher am Hydraulikblock 10 angeordnete dritte Stichkanal 32c ein. Gemäß Figur 3 ist die Mündung des Kanals nach außen mittels eines Verschlusselements 40a verschlossen. Vorzugsweise wird hierfür eine Kugel verwendet, die im Bereich der Ausmündung des Kanals 24 zur Umgebung druckmitteldicht in den Bohrungsabschnitt 24a eingepresst ist. Ein Sperrelement 40b, welches hier ebenfalls als Kugel ausgebildet ist, ist kurz nach dem Übergang zwischen den beiden Bohrungsabschnitten 24a, 24b in den im Innendurchmesser kleineren Bohrungsabschnitt 24b eingepresst. Anstelle von Kugeln ließen sich beispielsweise auch zylinderförmige Verschluss- bzw. Sperrelemente 40a, 40b mit an den Innendurchmesser des zugeordneten Bohrungsabschnitts 24a, 24b angepassten Durchmessern einsetzen.

Das Sperrelement 40b trennt die ansonsten zwischen den beiden Hydraulikkreisen bestehende Druckmittelverbindung, so dass sich der gemeinsame Kanal 24 einen mit dem einen Hydraulikkreis verbundenen Bohrungsabschnitt 24a und einen mit dem jeweils anderen Hydraulikkreis verbundenen zweiten Bohrungsabschnitt 24b aufweist.

Figur 4 zeigt eine alternative Ausführungsform eines Sperr- und Verschlusselements 42, das stiftförmig geformt ist und einen im Durchmesser auf den Bohrungsabschnitt 24a angepassten Kopf 42a aufweist. Dieser Kopf 42a ist einstückig mit einem im Durchmesser auf den Bohrungsabschnitt 24b abgestimmten Schaft 42b ausgebildet. Die Länge des Schafts 42b ist dabei so gewählt, dass dieser in den durchmesserkleineren Bohrungsabschnitt 24b des Kanals 24 eindringt und diesen verschließt, sobald der Kopf 42a des Verschlusselements 42 in dem durchmessergrößeren Bohrungsabschnitt 24a eingepresst ist und damit den Kanal 24 zur Umgebung hin abdichtet.

Mit einem einzigen stiftförmigen Sperr- und Verschlusselement 42 und einem einzigen Einpressvorgang in einem einzigen Kanal 24 lassen sich demnach sowohl die beiden Hydraulikkreise voneinander trennen, sowie zwei Drucksensoren mit den beiden Hydraulikkreisen kontaktieren und schließlich eine Abdichtung des gemeinsamen Kanals 24 gegenüber der Umgebung herstellen. Dies spart Bauraum, Gewicht, Teileanzahl, Fertigungskosten und Montagekosten für den Hydraulikblock 10 ein.

Selbstverständlich sind Änderungen oder Ergänzungen an den beschriebenen Ausführungsbeispielen denkbar, ohne von der Erfindung gemäß den Merkmalen des Anspruchs 1 abzuweichen.

## Patentansprüche

1. Hydraulikblock (10) für ein Hydraulikaggregat zur Steuerung des Bremsdrucks in einer schlupfregelbaren Fahrzeugbremsanlage, mit Aufnahmen (14) für Druckerzeuger, Ventile und/oder Drucksensoren und mit Druckmittelverbindungen durch welche die Aufnahmen (14) zu wenigstens zwei hydraulisch voneinander getrennten Druckmittelkreisen verbunden sind, wobei jedem Druckmittelkreis wenigstens eine Aufnahme (14f) für einen Drucksensor zugeordnet ist, **dadurch gekennzeichnet,**
**dass** zur hydraulischen Kontaktierung der Aufnahmen (14f) von wenigstens zwei Drucksensoren unterschiedlicher Druckmittelkreise ein gemeinsamer Kanal (24) vorgesehen ist, in dem sich ein Sperrelement (40b, 42) befindet, das die ansonsten bestehende Druckmittelverbindung zwischen den Druckmittelkreisen trennt.

2. Hydraulikblock nach Anspruch 1, **dadurch gekennzeichnet, dass** der gemeinsame Kanal (24) gebildet ist durch eine gerade verlaufende und an ihren Enden verschlossene Längsbohrung.

3. Hydraulikblock nach Anspruch 1, **dadurch gekennzeichnet, dass** der gemeinsame Kanal (24) eine Sacklochbohrung ist, die zu einer Aufnahmen (14h) für Anschlüsse von Radbremsen aufweisenden Seite (26) des Hydraulikblocks (10) hin ausmündet.

4. Hydraulikblock nach Anspruch 2 oder 3, **dadurch gekennzeichnet, dass** der Kanal (24) in seinem Innendurchmesser abgesetzt ist, und dass das Sperrelement (40b, 42) im Bereich des Übergangs zwischen den unterschiedlichen Innendurchmessern angeordnet ist.

5. Hydraulikblock nach einem der Ansprüche 1 bis 4, **dadurch gekennzeichnet, dass** erste und zweite Stichkanäle (32a, 32b) vorgesehen sind, welche die Aufnahmen (14f) der Drucksensoren mit dem Kanal (24) verbinden und dass dritte und vierte Stichkanäle (32c, 32d) vorgesehen sind, welche Aufnahmen (14a, 14b) für Ventile mit dem Kanal (24) verbinden, wobei die Aufnahmen (14a, 14b) für Ventile unterschiedlichen Bremskreisen zugeordnet sind.

6. Hydraulikblock nach Anspruch 5, **dadurch gekennzeichnet, dass** die dritten und die vierten Stichkanäle (32c, 32d) zueinander gegensinnig unter von 90° abweichenden Winkeln zu den Außenflächen (12, 30) des Hydraulikblocks (10) verlaufen.

7. Hydraulikblock nach einem der Ansprüche 1 bis 6, **dadurch gekennzeichnet, dass** das Sperrelement (40b) eine Kugel ist, die in einen durchmesserkleineren Bohrungsabschnitt (24b) des Kanals (24) eingepresst ist.

8. Hydraulikblock nach einem der Ansprüche 1 bis 6, **dadurch gekennzeichnet, dass** der gemeinsame Kanal (24) in Form einer Sacklochbohrung ausgebildet ist und dass das Sperrelement (42) des gemeinsamen Kanals (24) zu einem einteiligen stiftförmigen Element mit einem an einen Bohrungsabschnitt (24a) angepassten Kopf (42a) und einem gegenüber dem Kopf (42a) im Durchmesser kleineren und an einen Bohrungsabschnitt (24b) angepassten Schaft (42b) ausgebildet ist, wobei die Länge des Schaftes (42b) derart gewählt ist, dass dieser den Bohrungsabschnitt (24b) des Kanals (24) abdichtet, wenn der Kopf (42a) eine Mündung des Kanals (24) nach außen verschließt.

9. Hydraulikblock nach einem der Ansprüche 1 bis 8, **dadurch gekennzeichnet, dass** Aufnahmen (14a) für Ventile nebeneinander in einer geraden ersten Zeile (18a) am Hydraulikblock (10) angeordnet sind, dass Aufnahmen (14b) für Ventile nebeneinander in einer zweiten Zeile (18b) am Hydraulikblock (10) vorgesehen sind, welche unterhalb und parallel zur ersten Zeile (18a) von Ventilaufnahmen verläuft, dass eine Aufnahme (14f) eines ersten Drucksensors oberhalb der ersten Zeile (18a) von Ventilaufnahmen angeordnet ist, dass die Aufnahme (14f) des zweiten Drucksensors zwischen den beiden Zeilen (18a, 18b) der Ventilaufnahmen angeordnet ist und dass die Aufnahme (14f) des ersten Drucksensors mit einer Ventilaufnahme (14a) der ersten Zeile (18a) und die Aufnahme (14f) des zweiten Drucksensors mit einer Aufnahme (14b) für Ventile der zweiten, darunter liegenden Zeile (18b) verbunden ist.

10. Hydraulikblock nach einem der Ansprüche 1 bis 9, **dadurch gekennzeichnet, dass** der Kanal (24), mit dem die Aufnahmen (14f) des ersten und des zweiten Drucksensors kontaktiert sind, senkrecht zu den Zeilen (18a, 18b) von Aufnahmen für Ventile am Hydraulikblock (10) verläuft.

11. Hydraulikblock nach einem der Ansprüche 1 bis 10, **dadurch gekennzeichnet, dass** die Aufnahmen (14f) des ersten und die des zweiten Drucksensors jeweils mit einer Aufnahme (14h) für einen Anschluss einer Radbremse kontaktiert sind, wobei Aufnahmen (14h) für die Anschlüsse der Radbremsen verschiedenen Druckmittelkreisen zugeordnet sind.

## Claims

1. Hydraulic block (10) for a hydraulic unit for controlling the brake pressure of a vehicle brake system with traction control, having sockets (14) for pressure generators, valves and/or pressure sensors and having fluid connections through which the sockets (14) are connected to at least two fluid circuits hydraulically separated from one another, wherein at least one socket (14f) for a pressure sensor is assigned to each fluid circuit, **characterized in that** for the hydraulic contact of the sockets (14f) of at least two pressure sensors of different fluid circuits a common duct (42) is provided, situated in which is a shut-off element (40b, (42), which separates the fluid connection that otherwise exists between the two fluid circuits.

2. Hydraulic block according to Claim 1, **characterized in that** the common duct (24) is formed by a longitudinal bore running in a straight line and closed at its ends.

3. Hydraulic block according to Claim 1, **characterized in that** the common duct (24) is a blind bore, which opens out towards a side (26) of the hydraulic block (10) having sockets (14h) for connections of wheel brakes.

4. Hydraulic block according to Claim 2 or 3, **characterized in that** the inside diameter of the duct (24) is stepped and that the shut-off element (40b, 42) is arranged in the area of the transition between the different inside diameters.

5. Hydraulic block according to one of Claims 1 to 4, **characterized in that** first and second branch ducts (32a, 32b) are provided, which connect the sockets (14f) of the pressure sensors to the duct (24) and that third and fourth branch ducts (32c, 32d) are provided, which connect sockets (14a, 14b) for valves to the duct (24), wherein the sockets (14a, 14b) for valves are assigned to different brake circuits.

6. Hydraulic block according to Claim 5, **characterized in that** the third and the fourth branch ducts (32c, 32d) run in opposite directions towards one another at angles of other than 90° to the external faces (12, 30) of the hydraulic block (10).

7. Hydraulic block according to one of Claims 1 to 6, **characterized in that** the shut-off element (40b) is a ball, which is pressed into a bore portion (24b) of the duct (24) of smaller diameter.

8. Hydraulic block according to one of Claims 1 to 6, **characterized in that** the common duct (24) takes the form of a blind bore, and **in that** the shut-off element (42) of the common duct (24) is formed into an integral pin-shaped element having a head (42a) matched to a bore portion (24a) and a shank (42b) of smaller diameter than the head (42a) and matched to a bore portion (24b), wherein the length of the shank (42b) is selected in such a way that this seals off the bore portion (24b) of the duct (24) when the head (42a) externally seals an orifice of the duct (24).

9. Hydraulic block according to one of Claims 1 to 8, **characterized in that** sockets (14a) for valves are arranged side by side in a straight first row (18a) on the hydraulic block (10), that sockets (14b) for valves are provided side by side in a second row (18b) on the hydraulic block (10), which runs below and parallel to the first row (18a) of valve sockets, that a socket (14f) of a first pressure sensor is arranged above the first row (18a) of valve sockets, that the socket (14f) of the second pressure sensor is arranged between the two rows (18a, 18b) of valve sockets and that the socket (14f) of the first pressure sensor is connected to a valve socket (14a) of the first row (18a) and the socket (14f) of the second pressure sensor is connected to a socket (14b) for valves of the second, underlying row (18b).

10. Hydraulic block according to one of Claims 1 to 9, **characterized in that** the duct (24) with which the sockets (14f) of the first and the second pressure sensors have contact runs perpendicular to the rows (18a, 18b) of sockets for valves on the hydraulic block (10).

11. Hydraulic block according to one of Claims 1 to 10, **characterized in that** the sockets (14f) of the first pressure sensor and of the second pressure sensor each have contacts with a socket (14h) for a connection of a wheel brake, wherein sockets (14h) for the connections of the wheel brakes are assigned to different fluid circuits.

## Revendications

1. Bloc hydraulique (10) pour un groupe hydraulique pour la commande de la pression de freinage dans un système de freinage de véhicule à régulation du glissement, avec des logements (14) pour des générateurs de pression, des soupapes et/ou des capteurs de pression et avec des raccordements d'agent sous pression par lesquels les logements (14) sont raccordés à au moins deux circuits d'agent sous pression hydrauliquement séparés l'un de l'autre, dans lequel au moins un logement (14f) pour un capteur de pression est associé à chaque circuit d'agent sous pression, **caractérisé en ce**
**qu'**il est prévu pour la mise en contact hydraulique des logements (14f) d'au moins deux capteurs de pression de circuits d'agent sous pression différents un canal commun (24), dans lequel se trouve un élément d'arrêt (40b, 42) qui sépare le raccordement d'agent sous pression qui existe par ailleurs entre les circuits d'agent sous pression.

2. Bloc hydraulique selon la revendication 1, **caractérisé en ce que** le canal commun (24) est formé par un alésage longitudinal s'étendant en ligne droite et fermé à ses extrémités.

3. Bloc hydraulique selon la revendication 1, **caractérisé en ce que** le canal commun (24) est un alésage borgne, qui débouche vers un côté (26) du bloc hydraulique (10) présentant des logements (14h) pour des raccords de freins de roue.

4. Bloc hydraulique selon la revendication 2 ou 3, **caractérisé en ce que** le canal (24) présente une diminution de son diamètre intérieur, et **en ce que** l'élément d'arrêt (40b, 42) est disposé dans la région de la transition entre les différents diamètres intérieurs.

5. Bloc hydraulique selon l'une quelconque des revendications 1 à 4, **caractérisé en ce qu'**il est prévu des premiers et des deuxièmes canaux de liaison (32a, 32b), qui relient les logements (14f) des capteurs de pression au canal (24), et **en ce qu'**il est prévu des troisièmes et des quatrièmes canaux de liaison (32c, 32d), qui relient des logements (14a, 14b) pour des soupapes au canal (24), dans lequel les logements (14a, 14b) pour des soupapes sont associés à des circuits de frein différents.

6. Bloc hydraulique selon la revendication 5, **caractérisé en ce que** les troisièmes et les quatrièmes canaux de liaison (32c, 32d) s'étendent à contresens les uns par rapport aux autres sous des angles différents de 90° par rapport aux faces extérieures (12, 30) du bloc hydraulique (10).

7. Bloc hydraulique selon l'une quelconque des revendications 1 à 6, **caractérisé en ce que** l'élément d'arrêt (40b) est une bille, qui est enfoncée dans une section d'alésage de plus petit diamètre (24b) du canal (24).

8. Bloc hydraulique selon l'une quelconque des revendications 1 à 6, **caractérisé en ce que** le canal commun (24) est réalisé en forme d'alésage borgne et **en ce que** l'élément d'arrêt (42) du canal commun (24) est réalisé en un élément d'une seule pièce en forme de broche avec une tête (42a) adaptée à une section d'alésage (24a) et un corps (42b) de plus petit diamètre que la tête (42a) et adapté à une section d'alésage (24b), dans lequel la longueur du corps (42b) est choisie de telle manière que celui-ci obture la section d'alésage (24b) du canal (24), lorsque la tête (42a) ferme une ouverture du canal (24) vers l'extérieur.

9. Bloc hydraulique selon l'une quelconque des revendications 1 à 8, **caractérisé en ce que** des logements (14a) pour des soupapes sont disposés l'un à côté de l'autre en une première ligne droite (18a) sur le bloc hydraulique (10), **en ce qu'**il est prévu des logements (14b) pour des soupapes l'un à côté de l'autre en une deuxième ligne (18b) sur le bloc hydraulique (10), qui s'étend en dessous de et parallèlement à la première ligne (18a) de logements de soupapes, **en ce qu'**un logement (14f) d'un premier capteur de pression est disposé au-dessus de la première ligne (18a) de logements de soupapes, **en ce que** le logement (14f) du deuxième capteur de pression est disposé entre les deux lignes (18a, 18b) des logements de soupapes et **en ce que** le logement (14f) du premier capteur de pression est relié à un logement de soupape (14a) de la première ligne (18a) et le logement (14f) du deuxième capteur de pression est relié à un logement (14b) pour des soupapes de la deuxième ligne (18b) située sous celle-ci.

10. Bloc hydraulique selon l'une quelconque des revendications 1 à 9, **caractérisé en ce que** le canal (24), avec lequel les logements (14f) du premier et du deuxième capteurs de pression sont en contact, s'étend perpendiculairement aux lignes (18a, 18b) de logements pour des soupapes sur le bloc hydraulique (10).

11. Bloc hydraulique selon l'une quelconque des revendications 1 à 10, **caractérisé en ce que** les logements (14f) du premier et du deuxième capteurs de pression sont en contact respectivement avec un logement (14h) pour un raccord d'un frein de roue, dans lequel des logements (14h) pour les raccords des freins de roue sont associés à des circuits d'agent sous pression différents.
